# FASCICULE DE BREVET EUROPEEN

(11) **EP 0 464 883 B1**
(45) Date de publication et mention de la délivrance du brevet: **26.04.1995**
(21) Numéro de dépôt: 91201456.0
(22) Date de dépôt: 13.06.1991
(51) Int. Cl.: C08L 27/06

(54) **Procédé pour compatibiliser des mélanges comprenant au moins une résine à base de chlorure de vinyle et au moins une résine à base d'oléfine(s)**
Verfahren zum Erziehen von Kompatibilität in Mischungen, die mindestens ein Vinylchloridharz und mindestens ein Olefinharz enthalten
Process for rendering compatible mixtures of at least one vinyl chloride resin and at least one olefin resin

(30) Priorité: 22.06.1990 BE 9000643
(43) Date de publication de la demande: 08.01.1992
(73) Titulaire: SOLVAY (Société Anonyme), B-1050 Bruxelles (BE)
(72) Inventeur: Dehennau, Claude, B-1410 Waterloo (BE); Depireux, Thierry, B-1410 Waterloo (BE)
(74) Mandataire: Dufrasne, Eugène

(56) Documents cités:
- BE-A- 654 248
- DATABASE WPI, no. 73-47676U, Derwent Publications Ltd, London, GB; & JP-B-51 047 180
- JOURNAL OF VINYL TECHNOLOGY, vol. 2, no, 4, décembre 1980, pages 218-221; P. Bataille et al.: 'Polymer reprocessing: Properties of polyethylene-polyvinyl chloride mixtures'

## Description

La présente invention concerne un procédé pour compatibiliser des mélanges comprenant au moins une résine à base de chlorure de vinyle et au moins une résine à base d'oléfine(s).

Pour des raisons d'économie et d'écologie, il est hautement souhaitable de pouvoir récupérer et recycler les déchets provenant de l'industrie des matières thermoplastiques.

Toutefois une des difficultés majeures rencontrées lors des tentatives de récupération et de recyclage de ces déchets provient du fait que ceux-ci ne sont pas constitués d'une seule matière thermoplastique mais d'un ensemble de matières thermoplastiques qui souvent sont incompatibles entre elles.

Ainsi par exemple, il est notoirement connu que les résines à base de chlorure de vinyle, prises dans un sens très large, sont incompatibles avec les résines à base d'oléfine(s). Or, ces deux types de résines sont très largement utilisés dans l'industrie des matières plastiques et se retrouvent donc, en des proportions très importantes, dans les déchets résultants de cette industrie.

Il a maintenant été constaté qu'il est possible de compatibiliser des déchets de résines à base de chlorure de vinyle et de résines à base d'oléfine(s) et de produire à partir de tels mélanges des articles tels que des feuilles présentant d'excellentes propriétés et une bonne transparence.

La présente invention concerne, dès lors, un procédé pour compatibiliser des mélanges comprenant au moins une résine à base de chlorure de vinyle et au moins une résine à base d'oléfine(s) qui se caractérise en ce que on réalise un mélange comprenant de 50 à 95 % en poids d'au moins une résine à base de chlorure de vinyle, de 1 à 20 % en poids d'au moins une résine à base d'oléfine(s), de 1 à 20 % en poids d'un copolymère d'éthylène et d'acétate de vinyle ayant une teneur en acétate de vinyle comprise entre 10 et 35 % et de 2 à 40 % en poids d'un copolymère d'éthylène et d'acétate de vinyle ayant une teneur en acétate de vinyle comprise entre 60 et 95 % et en ce qu'on procède ensuite à la mise en oeuvre du mélange ainsi réalisé.

Par résine à base de chlorure de vinyle, on entend désigner les homopolymères du chlorure de vinyle ainsi que les copolymères du chlorure de vinyle contenant au moins 70 % en poids d'unités dérivées de chlorure de vinyle, le ou les comonomère(s) utilisé(s) pour la production de ces derniers étant choisi(s) dans le groupe formé par les oléfines telles que l'éthylène, le propylène ou le styrène et les esters tels que l'acétate de vinyle et les acrylates et méthacrylates d'alkyle. En règle générale, la préférence est toutefois accordée aux résines à base d'homopolymères du chlorure de vinyle.

Par résine à base d'oléfine(s), on entend désigner les homopolymères des alpha-oléfines tels que le polypropylène ou le polyéthylène de basse ou de haute densité ainsi que les copolymères contenant au moins 70 % en poids d'unités dérivées d'alpha-oléfines. En règle générale, la préférence est toutefois accordée aux homopolymères de l'éthylène et, en particulier, au polyéthylène de basse densité (0,915 à 0,930).

Les meilleurs résultats sont atteints en incorporant dans le mélange de résine(s) à base de chlorure de vinyle et de résine(s) à base d'oléfine(s) de 1 à 10 % en poids d'un copolymère d'éthylène et d'acétate de vinyle ayant une teneur en acétate de vinyle comprise entre 20 et 30 % et de 10 à 30 % en poids d'un copolymère d'éthylène et d'acétate de vinyle ayant une teneur en acétate de vinyle comprise entre 65 et 85 %.

Le mélange de résine(s) à base de chlorure de vinyle et de résine(s) à base d'oléfine(s) peut encore contenir de petites proportions d'autres résines thermoplastiques telles que notamment le polystyrène ou des résines à base de chlorure de vinylidène. Ainsi, par exemple, il a été constaté que le mélange peut éventuellement contenir de 1 à 20 parties en poids de résines à base de chlorure de vinylidène (copolymères de chlorure de vinylidène et de chlorure de vinyle ou d'esters acryliques ou méthacryliques).

L'incorporation au mélange des copolymères d'éthylène et d'acétate de vinyle peut avantageusement être réalisée par malaxage à chaud dans un appareillage conventionnel et la mise en oeuvre du mélange ainsi obtenu peut être exécutée dans des appareillages classiques tels que des presses, des extrudeuses ou des calandres.

Il est bien évident qu'il peut être avantageux d'incorporer des additifs usuels tels que des plastifiants, des stabilisants, des lubrifiants etc. dans le mélange avant sa mise en oeuvre.

Le procédé conforme à la présente invention est, en outre, illustré plus en détails dans les exemples de réalisation pratique qui suivent.

### Exemple 1

Dans un malaxeur à chaud, on introduit :
- 68 parties en poids de polychlorure de vinyle stabilisé (indice K = 58) ;
- 4,5 parties en poids de polyéthylène basse densité ;
- 23 parties en poids d'un copolymère d'éthylène et d'acétate de vinyle ayant une teneur en acétate de vinyle de 65 % ;
- 4,5 parties en poids d'un copolymère d'éthylène et d'acétate de vinyle ayant une teneur en acétate de vinyle de 28 % ;
Après malaxage, le mélange obtenu est pressé pour obtenir une feuille dont on prélève un échantillon répertorié A.

### Exemple 2R

A titre d'essai comparatif, on répète l'exemple 1 mais en introduisant uniquement le polychlorure de vinyle et le polyéthylène basse densité dans le malaxeur à chaud et, après pressage du mélange, on prélève un échantillon répertorié B de la feuille produite.

### Exemple 3R

A titre d'essai comparatif, on repète l'exemple 1 mais en introduisant uniquement le polychlorure de vinyle, le polyéthylène basse densité et le copolymère d'éthylène et d'acétate de vinyle ayant une teneur en acétate de vinyle de 65 %. L'échantillon prélévé de la feuille ensuite produite par pressage est répertorié C.

### Exemple 4R

A titre d'essai comparatif, on répète l'exemple 1 mais en introduisant uniquement le polychlorure de vinyle, le polyèthylène basse densité et le copolymère d'éthylène et d'acétate de vinyle ayant une teneur en acétate de 28 %. L'échantillon prélevé de la feuille ensuite produite par pressage est répertorié D.

On soumet ensuite une coupe microtomique des échantillons A, B, C et D à un examen micrographique entre nicols croisés de façon à mettre en évidence les dimensions des particules de polyéthylène. On constate ainsi que les dimensions des particules observées dans l'échantillon A obtenu selon le procédé conforme à l'invention sont nettement inférieures à celles des échantillons B, C et D qui sont exclus du cadre de l'invention. En fait, l'échantillon B contient des particules de dimensions plus élevées que celles des échantillons A, C et D mais la dispersion et la réduction maxima des particules est observée sur l'échantillon A.

On soumet, en outre, les divers échantillons à un essai de résilience en traction à 23°C (éprouvettes non entaillées, énergie du pendule 75 kg/cm). Le tableau ci après reprend les résultats moyens calculés sur 5 éprouvettes.

| échantillon | résilience en traction (kJ/m²) |
|---|---|
| A | 107 |
| B | 26 |
| C | 46 |
| D | 33 |

Le tableau montre que le produit obtenu selon le procédé de l'invention présente une résilience en traction nettement supérieure.

### Exemple 5

Dans un malaxeur à chaud, on introduit 100 parties en poids de déchets de feuilles de polychlorure de vinyle doublées d'une pellicule de polyéthylène basse densité à l'intervention d'un adhésif constitué par un copolymère d'éthylène et d'acétate de vinyle à 28 % d'acétate de vinyle, 3 parties en poids d'un stabilisant à l'étain et 30 parties en poids d'un copolymère d'éthylène et d'acétate de vinyle ayant une teneur en acétate de vinyle de 68 % (vendu par Farbenfabriek Bayer sous la dénomination : BAYMOD KL3-2418) de façon telle que la composition malaxée contient 68,5 % en poids de polychlorure de vinyle stabilisé, 4,3 % en poids de polyéthylène basse densité, 4,7 % en poids de copolymère d'éthylène et d'acétate de vinyle ayant une teneur en acétate de vinyle de 28 % et 22,5 en poids de copolymère d'éthylène et d'acétate de vinyle ayant une teneur en acétate de vinyle de 68 %.

La composition malaxée est ensuite pressée pour produire une feuille qui se caractérise par une transparence remarquable (gain en absorbance de 47 % par rapport à une feuille produite à partir d'une composition similaire mais dans laquelle on a remplacé le copolymère à forte teneur en acétate de vinyle par une quantité équivalente de polychlorure de vinyle).

En outre, la résilience en traction du produit obtenu est de 159 kJ/m².

A titre de comparaison, la résilience en traction d'une feuille produite uniquement à partir des déchets de feuille et donc sans incorporation de copolymère d'éthylène et d'acétate de vinyle à forte teneur en acétate de vinyle s'élève seulement à 84 kJ/m².

### Exemple 6

Dans un malaxeur à chaud on introduit :
- 100 parties en poids de chutes de feuilles composites comprenant successivement :
   - une couche de polychlorure de vinyle ;
   - une couche de polychlorure de vinylidène ;
   - une couche de polychlorure de vinyle ;
   - une pellicule d'adhésif constitué par un copolymère d'éthylène et d'acétate de vinyle ayant une teneur en acétate de vinyle de 28 % ;
   - une couche de polyéthylène ;
- 20 parties en poids d'un copolymère d'éthylène et d'acétate de vinyle ayant une teneur en acétate de vinyle de 65 % ;
- 1 partie en poids d'un stabilisant de polychlorure de vinylidène de façon telle que la composition malaxée contient 68,5 % en poids de polychlorure de vinyle, 7,5 % en poids de polychlorure de vinylidène stabilisé, 7,5 % en poids de polyéthylène, 2 % en poids de copolymère d'éthylène et d'acétate de vinyle à faible teneur en acétate de vinyle et 16,5 % en poids de copolymère d'éthylène et d'acétate de vinyle à forte teneur en acétate de vinyle.

La composition malaxée est ensuite pressée pour produire une feuille qui se caractérise par une transparence remarquable.

En outre, la résilience en traction du produit obtenu est de 195 kJ/m².

A titre de comparaison, la résilience en traction d'une feuille produite uniquement à partir des déchets de feuilles et donc sans incorporation de copolymère d'éthylène à forte teneur en acétate de vinyle s'élève seulement à 70 kJ/m².

## Revendications

1. Procédé pour compatibiliser des mélanges comprenant au moins une résine à base de chlorure de vinyle et au moins une résine à base d'oléfine(s) caractérisé en ce que on réalise un mélange comprenant de 50 à 95 % en poids d'au moins une résine à base de chlorure de vinyle, de 1 à 20 % en poids d'au moins une résine à base d'oléfine(s), de 1 à 20 % en poids d'un copolymère d'éthylène et d'acétate de vinyle ayant une teneur en acétate de vinyle comprise entre 10 et 35 % et de 2 à 40 % en poids d'un copolymère d'éthylène et d'acétate de vinyle ayant une teneur en acétate de vinyle comprise entre 60 et 95 % et en ce qu'on procède ensuite à la mise en oeuvre du mélange ainsi réalisé.

2. Procédé selon la revendication 1 caractérisé en ce que le mélange contient en outre de 1 à 20 % en poids de résines à base de chlorure de vinylidène.

3. Procédé selon la revendication 1 caractérisé en ce le mélange contient de 1 à 10 % en poids d'un copolymère d'éthylène et d'acétate de vinyle ayant une teneur en acétate de vinyle comprise entre 20 et 30 % et de 10 à 30 % en poids d'un copolymère d'éthylène et d'acétate de vinyle ayant une teneur en acétate de vinyle comprise entre 65 et 85 %.

4. Procédé selon la revendication 1 caractérisé en ce que la résine à base de chlorure de vinyle est du polychlorure de vinyle.

5. Procédé selon la revendication 1 caractérisé en ce que la résine à base d'oléfine(s) est un homopolymère de l'éthylène.

6. Procédé selon l'une quelconque des revendications 1 à 5 caractérisé en ce que les copolymères d'éthylène et d'acétate de vinyle sont incorporés dans le mélange par malaxage à chaud.

## Claims

1. Process for rendering mixtures comprising at least one vinyl chloride-based resin and at least one olefin-based resin compatible, characterised in that a mixture is produced comprising from 50 to 95% by weight of at least one vinyl chloride-based resin, from 1 to 20% by weight of at least one olefin-based resin, from 1 to 20% by weight of a copolymer of ethylene and vinyl acetate which has a vinyl acetate content of between 10 and 35% and from 2 to 40% by weight of a copolymer of ethylene and vinyl acetate which has a vinyl acetate content of between 60 and 95% and in that the mixture thus produced is then processed.

2. Process according to Claim 1, characterised in that the mixture additionally contains from 1 to 20% by weight of vinylidene chloride-based resins.

3. Process according to Claim 1, characterised in that the mixture contains from 1 to 10% by weight of a copolymer of ethylene and vinyl acetate which has a vinyl acetate content of between 20 and 30% and from 10 to 30% by weight of a copolymer of ethylene and vinyl acetate which has a vinyl acetate content of between 65 and 85%.

4. Process according to Claim 1, characterised in that the vinyl chloride-based resin is polyvinyl chloride.

5. Process according to Claim 1, characterised in that the olefin-based resin is an ethylene homopolymer.

6. Process according to any one of Claims 1 to 5, characterised in that the copolymers of ethylene and vinyl acetate are incorporated in the mixture by hot mixing.

## Patentansprüche

1. Verfahren zum Erzielen von Kompatibilität in Mischungen, die mindestens ein Vinylchloridharz und mindestens ein Olefinharz enthalten, dadurch gekennzeichnet, daß man eine Mischung herstellt, die 50 bis 95 Gew.-% von wenigstens einem Vinylchloridharz, 1 bis 20 Gew.-% von wenigstens einem Olefinharz, 1 bis 20 Gew.-% eines Ethylen/Vinylacetat-Copolymeren mit einem Vinylacetat-Gehalt zwischen 10 und 35% und 2 bis 40 Gew.-% eines Ethylen/Vinylacetat-Copolymeren mit einem Vinylacetat-Gehalt zwischen 60 und 95% enthält, und dadurch, daß man danach die Verarbeitung der so hergestellten Mischung vornimmt..

2. Verfahren gemäß Anspruch 1, dadurch gekennzeichnet, daß die Mischung außerdem 1 bis 20 Gew.-% Vinylidenchloridharze enthält.

3. Verfahren gemäß Anspruch 1, dadurch gekennzeichnet, daß die Mischung 1 bis 10 Gew.-% eines Ethylen/Vinylacetat-Copolymeren mit einem Vinylacetat-Gehalt zwischen 20 und 30% und 10 bis 30 Gew.-% eines Ethylen/Vinylacetat-Copolymeren mit einem Vinylacetat-Gehalt zwischen 65 und 85% enthält.

4. Verfahren gemäß Anspruch 1, dadurch gekennzeichnet, daß das Vinylchloridharz Polyvinylchlorid ist.

5. Verfahren gemäß Anspruch 1, dadurch gekennzeichnet, daß das Olefinharz ein Homopolymeres des Ethylens ist.

6. Verfahren gemäß irgendeinem der Ansprüche 1 bis 5, dadurch gekennzeichnet, daß die Ethylen/Vinylacetat-Copolymere durch Kneten in der Wärme in die Mischung eingeführt werden.
